# EUROPEAN PATENT APPLICATION

(11) **EP 3 933 742 A1**
(43) Date of publication of application: **05.01.2022**
(21) Application number: 21172600.5
(22) Date of filing: 06.05.2021
(51) Int. Cl.: G06Q 30/02, G06Q 30/06, G06Q 50/00

(54) **IDENTIFYING COOCCURING PRODUCTS IN CONTENT PROVIDED TO AN ONLINE SYSTEM BY USERS**

(30) Priority: 30.06.2020 US 202016917872
(71) Applicant: Facebook, Inc., Menlo Park, CA 94025 (US)
(72) Inventor: MORIN, Steve, Menlo Park (US); MADAN, Anuj, Menlo Park (US)
(74) Representative: Murgitroyd & Company

(57) **Abstract**

A publishing user identifies a product offered by the user to an online system by providing multiple images of various products viewed at different angles to the online system. The online system applies an identification model to content items obtained from other users to identify one or more of the products in various content items. Based on a product selected by a viewing user, the online system applies the identification model to various content items to identify content items including the selected product and to identify other products included in content items including the selected product. The online system provides information identifying the other products included in content items along with the selected product to the viewing user. The online system may rank other products included in content items along with the selected product and identify other products to the viewing user based on the ranking.

## Description

### BACKGROUND

This disclosure relates generally to display of content by an online system, and more specifically to the online system identifying cooccurrences of different products in content items obtained by the online system from users for presentation.

Online systems, such as social networking systems, allow users to connect to and to communicate with other users of the online system. Users may create profiles on an online system that are tied to their identities and include information about the users, such as interests and demographic information. The users may be individuals or entities such as corporations or charities. Online systems allow users to easily communicate and to share content with other online system users by providing content to an online system for presentation to other users.

Additionally, many publishing users of an online system offer products for purchase by other users and distribute content items including the offered products to other users via the online system. For example, a publishing user offers home goods for purchase by other user and distributes content items including images of the home goods to other users to increase awareness of the home goods. To allow online system users to more readily purchase products offered by the purchasing user, the publishing user may provide a product page to the online system identifying multiple products offered for purchase by the publishing user. The product page includes one or more images of various products offered by the publishing user, as well as information about different products offered by the publishing user. Additionally, the product page may include one or more options for a viewing user to select and to purchase products offered by the publishing user via the product page.

Various products offered by a publishing user may complement each other, or many users may purchase combinations of products by the purchasing user. Different users may purchase different combinations of products. A user may be more likely to purchase a specific product and another product from the purchasing user because other users have purchased the specific product and the other product. However, the publishing user cannot practically maintain information identifying various combinations of products that are purchase by different users. Additionally, information describing purchases of combinations of products maintained by the purchasing user is unable to account for differing degrees of interest that a user has in products purchased by other users, limiting the ability of the purchasing user to identify combinations of products likely of interest to the viewing user.

### SUMMARY

An online system obtains information from a publishing user identifying products that a user of the online system offers for purchase by other users. The obtained information includes one or more pictures of each product associated with a product identifier and may also include additional information about each product. For example, the online system obtains a product catalog from the publishing user that includes entries for each product offered by the publishing user. In some embodiments, an entry in the product catalog for a product includes a product identifier of the product, one or more pictures of the product, a name of the product, a type of the product, and a price at which the publishing user offers the product for purchase. An entry in the product catalog for a product may also include a description of the product in some embodiments. Information identifying a product obtained from the publishing user includes multiple pictures of the product in some embodiments, with different pictures corresponding to different positions of the product relative to an image capture device (e.g., a camera) that captured the pictures of the product. The online system stores the information identifying the products offered by the publishing user, which includes one or more pictures of each of the products in association with the publishing user. For example, the online system stores information identifying the products offered by the publishing user in a user profile maintained by the online system for the publishing user or stores the obtained information identifying products offered by the publishing user in association with a user profile identifying the publishing user.

Additionally, the online system obtains content items from various users other than the publishing user for presentation to other users. A content item obtained from a user includes an image or a video and may also include text data or audio data. In various embodiments, a content item includes any combination of text data, audio data, image data, video data for presentation to other users via the online system. One or more content items obtained 310 from users other than the viewing user include an image or a video including a product offered by the publishing user.

Based on information from a viewing user other than the publishing user, the online system identifies a specific product offered by the publishing user. For example, the viewing user selects the specific product from information about products offered by the publishing user presented by the online system. As an example, the viewing user selects the specific product from a page presented by the online system identifying various products offered by the publishing user, so the online system identifies the specific product from the viewing user's selection via the page. In another example, the viewing user includes the specific product in an online shopping cart, and the online system receives information identifying the viewing user and describing inclusion of the specific product in the online shopping cart to identify the specific product.

Other products offered by the publishing user may complement the specific product identified by the viewing user or may be purchased by other users along with the specific product. To identify other products purchased or used in conjunction with the specific product, the online system leverages content items obtained from users other than the publishing user and other than the viewing user. For a content item obtained by the online system from a user other than the publishing user and other than the viewing user, the online system identifies objects from the content item obtained from a user other than the publishing user and other than the viewing user. In various embodiments, the online system applies one or more object detection methods to an image or to a video included in the content item from the user other than the publishing user and other than the viewing user that identify objects in the image or in the video within the content item. In various embodiments, the online system uses one or more object detection methods to identify objects within the content item to generate bounding boxes corresponding to each of the identified objects. When identifying objects from the content item, the online system may also identify a category or a type for each identified object. For example, an object detection method applied by the online system associates different types with objects based on characteristics of the objects, and the online system associates a type from the object detection method with an identified object.

The online system compares various objects identified from the content item obtained from the user other than the publishing user and other than the viewing user to pictures of the specific product identified by the viewing user included in the information identifying products offered by the publishing user that the online system obtained from the publishing user. In some embodiments, the online system compares each object identified from the content item obtained from the user other than the publishing user and other than the viewing user to pictures of the specific product obtained from the publishing user. When comparing an object identified from the content item obtained from the user other than the publishing user and other than the viewing user to previously obtained images of products offered by the publishing user, the online system determines a confidence of the identified object matching the specific product offered by the publishing user. To compare the object identified in the content item obtained from the user other than the publishing user and other than the viewing user to the specific product offered by the publishing user, the online system applies an identification model to the identified object and to the pictures obtained from the publishing user of the specific product offered by the publishing user. The online system trains the machine learning identification model from comparisons of objects identified from images to products identified to the online system by various users and may also account for comparisons of objects to publicly available information identifying different products when training the identification model. The online system trains the identification model to determine a likelihood of an object identified from a content item (e.g., an image or a video included in the content item) matching a product based on prior matching of objects in content items to different products. For example, the online system applies a label indicating a product matching an object identified from the content item to characteristics of the object identified from the content item. From the labeled characteristics of objects extracted from content items, the online system trains the identification model using any suitable training method or combination of training methods (e.g., back propagation to train the identification model if it is a neural network, curve fitting techniques if the identification model is a linear regression). After training, the online system applies the trained identification model to characteristics of objects identified within a content item, and the identification model outputs confidences of the object matching a product.

Responsive to online system determining the confidence of the object identified from the content item obtained by the user other than the publishing user and other than the viewing user has at least a threshold confidence value of matching the specific product, the online system determines the content item includes the specific product offered by the publishing user. In response to determining the content item includes the specific product offered by the publishing user that the viewing user identified, the online system compares other objects identified from the content item obtained from the user other than the publishing user and other than the viewing user to pictures of other products identified by the viewing user included in the information identifying products offered by the publishing user that the online system obtained from the publishing user. In some embodiments, the online system compares each object identified from the obtained content item other than the object having at least the threshold confidence value of matching the specific product to pictures of products other than the specified product obtained from the publishing user. When comparing an object identified from the content item obtained from the user other than the publishing user and other than the viewing user to previously obtained images of other products offered by the publishing user, the online system determines additional confidences of the other objects identified in the obtained content item matching one or more other products offered by the publishing user. To compare an object identified in the content item obtained from the user other than the publishing user and other than the viewing user to one or more other products offered by the publishing user, the online system applies the identification model to the identified object and to the pictures obtained from the publishing user of various other products offered by the publishing user.

In response to determining that an additional confidence of another object identified in the content item has at least the threshold confidence value of matching another product offered by the publishing user, the online system determines that the content item includes the other product offered by the publishing user. As multiple objects identified in the content item may have at least the threshold confidence value of matching various other products offered by the purchasing user, the online system may determine that the content item includes multiple other products offered by the publishing user. Hence, application of the identification model allows the online system to identify the specific product identified by the viewing user in a content item obtained from another user as well as to identify other products offered by the purchasing user that are in the content item along with the specific product.

The online system transmits information identifying one or more other products offered by the purchasing user the online system determined were included in the content item obtained from the other user. For example, the online system transmits information identifying the specific product and identifying one or more of the other products included in the content item obtained from the other user along with the specific product to the viewing user. The online system may also include a prompt or an indication that the one or more other products were included in a content item along with the specific product. In some embodiment, the transmitted information also identifies the other user from whom the content item including the specific product and the one or more other products was obtained; for example, the transmitted information includes a username of the other user from whom the content item was obtained.

In some embodiments, the online system limits transmission of information identifying another product offered by the publishing user and included in a content item along with the specific product to the viewing user to identifying other products appearing in at least a threshold number of other content items along with the specific product or appearing in content items with the specific product with at least a threshold frequency. The online system may also account for an affinity between the viewing user and another user from whom a content item including the specific product and another product was received, so the viewing user is more likely to receive information identifying another product included in a content item along with the specific product from other users for whom the viewing user has higher affinities. Further, the online system may account for types associated with the specific product and with another product included in a content item with the specific product, so the viewing user receives information identifying other products that have different types than a type of the specific product and that are included in one or more content items along with the specific product.

According to a first aspect, there is provided a method comprising: obtaining information identifying products offered by a publishing user of an online system, the obtained information including pictures of a product corresponding to different angles of the product; obtaining, at the online system, content items from one or more other users of the online system different from the publishing user; identifying, by the online system, a specific product offered by the publishing user of interest to a viewing user, the viewing user other than the publishing user; identifying a content item obtained from one or more users other than the publishing user and other than the viewing user; determining, by the online system, a confidence of an object identified in the content item matching the specific product by applying an identification model to the object identified the content item and to the pictures of the specific product obtained from the publishing user; determining that the confidence matches the specific product equals or exceeds a threshold confidence value; determining, by the online system, an additional confidence of another object identified in the content item matching another product by applying the identification model to the other object identified in the content item and to pictures of the other product obtained from the publishing user; determining that the additional confidence equals or exceeds the threshold confidence value; and transmitting, by the online system, information identifying the other product offered by the publishing user to the viewing user.

Transmitting, by the online system, information identifying the other product offered by the publishing user to the viewing user may comprise: determining a number of content items obtained from other users including an object having at least the threshold confidence value of matching the specific product and including another object having at least the threshold confidence value of matching the other product offered by the publishing user; and identifying information identifying the other product offered by the publishing user in response to the determined number of content items equaling or exceeding a threshold amount.

Transmitting, by the online system, information identifying the other product offered by the publishing user to the viewing user may comprise: determining a set of additional products offered by the publishing user for which objects identified in content items obtained from other users have at least the threshold confidence value of matching at least one additional object offered by the publishing user; ranking the set of additional products offered by the publishing user based on a number of content items obtained from other users including at least one object having at least the threshold confidence value matching a corresponding additional product; and identifying one or more additional products of the set having at least a threshold position in the ranking to the viewing user. Ranking the set of additional products offered by the publishing user based on the number of content items obtained from other users including at least one object having at least the threshold confidence value matching the corresponding additional project may comprise: identifying other users from whom the online system obtained content items including at least one object having at least the threshold confidence value of matching the corresponding additional product; determining affinities of the viewing user for each of the identified other users; and ranking the set of additional products offered by the publishing user based on the number of content items obtained from other users including at least one object having at least the threshold confidence value matching the corresponding additional product and affinities of the viewing user for identified other users from which content items including at least one object having at least the threshold confidence value of matching the corresponding additional product.

Transmitting, by the online system, information identifying the other product offered by the publishing user to the viewing user may comprise: determining an affinity of the viewing user for the other user from whom the content item was obtained; and transmitting the information identifying the other product offered by the publishing user to the viewing user in response to the determined affinity equaling or exceeding a threshold affinity.

The specific product may have a type. The other product may have a different type than the type of the specific product.

Transmitting, by the online system, information identifying the other product offered by the publishing user to the viewing user may comprise: transmitting information identifying the specific product and identifying the other product offered by the publishing user to the viewing user. The information identifying the specific product and identifying the other product offered by the publishing user may also include information identifying the user other than the publishing user and other than the viewing user.

Identifying, by the online system, the specific product offered by the publishing user of interest to the viewing user, the viewing user other than the publishing user may comprise: receiving, at the online system, information identifying the viewing user, identifying the specific product, and describing inclusion of the specific product in an online shopping cart by the viewing user.

According to a second aspect, there is provided a computer program product comprising a non-transitory computer readable storage medium having instructions encoded thereon that, when executed by a processor cause the processor to: obtain information identifying products offered by a publishing user of an online system, the obtained information including one or more pictures of a product corresponding to different angles of the product; obtain, at the online system, content items from one or more other users of the online system different from the publishing user; identify, by the online system, a specific product offered by the publishing user of interest to a viewing user, the viewing user other than the publishing user; identify a content item obtained from one or more users other than the publishing user and other than the viewing user; determine, by the online system, a confidence of an object identified in the content item matching the specific product by applying an identification model to the object identified the content item and to the pictures of the specific product obtained from the publishing user; determine that the confidence matches the specific product equals or exceeds a threshold confidence value; determine, by the online system, an additional confidence of another object identified in the content item matching another product by applying the identification model to the other object identified in the content item and to pictures of the other product obtained from the publishing user; determine that the additional confidence equals or exceeds the threshold confidence value; and transmit, by the online system, information identifying the other product offered by the publishing user to the viewing user.

Transmit, by the online system, information identifying the other product offered by the publishing user to the viewing user may comprise: determine a number of content items obtained from other users including an object having at least the threshold confidence value of matching the specific product and including another object having at least the threshold confidence value of matching the other product offered by the publishing user; and identify information identifying the other product offered by the publishing user in response to the determined number of content items equaling or exceeding a threshold amount.

Transmit, by the online system, information identifying the other product offered by the publishing user to the viewing user may comprise: determine a set of additional products offered by the publishing user for which objects identified in content items obtained from other users have at least the threshold confidence value of matching at least one additional object offered by the publishing user; rank the set of additional products offered by the publishing user based on a number of content items obtained from other users including at least one object having at least the threshold confidence value matching a corresponding additional product; and identify one or more additional products of the set having at least a threshold position in the ranking to the viewing user. Rank the set of additional products offered by the publishing user based on the number of content items obtained from other users including at least one object having at least the threshold confidence value matching the corresponding additional project may comprise: identify other users from whom the online system obtained content items including at least one object having at least the threshold confidence value of matching the corresponding additional product; determine affinities of the viewing user for each of the identified other users; and rank the set of additional products offered by the publishing user based on the number of content items obtained from other users including at least one object having at least the threshold confidence value matching the corresponding additional product and affinities of the viewing user for identified other users from which content items including at least one object having at least the threshold confidence value of matching the corresponding additional product.

Transmit, by the online system, information identifying the other product offered by the publishing user to the viewing user may comprise: determine an affinity of the viewing user for the other user from whom the content item was obtained; and transmit the information identifying the other product offered by the publishing user to the viewing user in response to the determined affinity equaling or exceeding a threshold affinity.

The specific product may have a type. The other product may have a different type than the type of the specific product.

Transmit, by the online system, information identifying the other product offered by the publishing user to the viewing user may comprise: transmit information identifying the specific product and identifying the other product offered by the publishing user to the viewing user. The information identifying the specific product and identifying the other product offered by the publishing user may also include information identifying the user other than the publishing user and other than the viewing user.

Identify, by the online system, the specific product offered by the publishing user of interest to the viewing user, the viewing user other than the publishing user may comprise: receive, at the online system, information identifying the viewing user, identifying the specific product, and describing inclusion of the specific product in an online shopping cart by the viewing user.

### BRIEF DESCRIPTION OF THE DRAWINGS

FIG. 1 is a block diagram of a system environment in which an online system operates, in accordance with an embodiment.
FIG. 2 is a block diagram of an online system, in accordance with an embodiment.
FIG. 3 is a flowchart of a method for an online system to identify different products offered by a publishing user in a content item obtained from another user, in accordance with an embodiment.
FIG. 4A is an example content item obtained by an online system from a user other than a viewing user that includes objects corresponding to multiple products offered by a different purchasing user, in accordance with an embodiment.
FIG. 4B is an example message transmitted from the online system to the viewing user identifying another product offered by the publishing user cooccurring with a specific product offered by the publishing user in a content item from another user, in accordance with an embodiment.

The figures depict various embodiments for purposes of illustration only. One skilled in the art will readily recognize from the following discussion that alternative embodiments of the structures and methods illustrated herein may be employed without departing from the principles described herein.

### DETAILED DESCRIPTION

### System Architecture

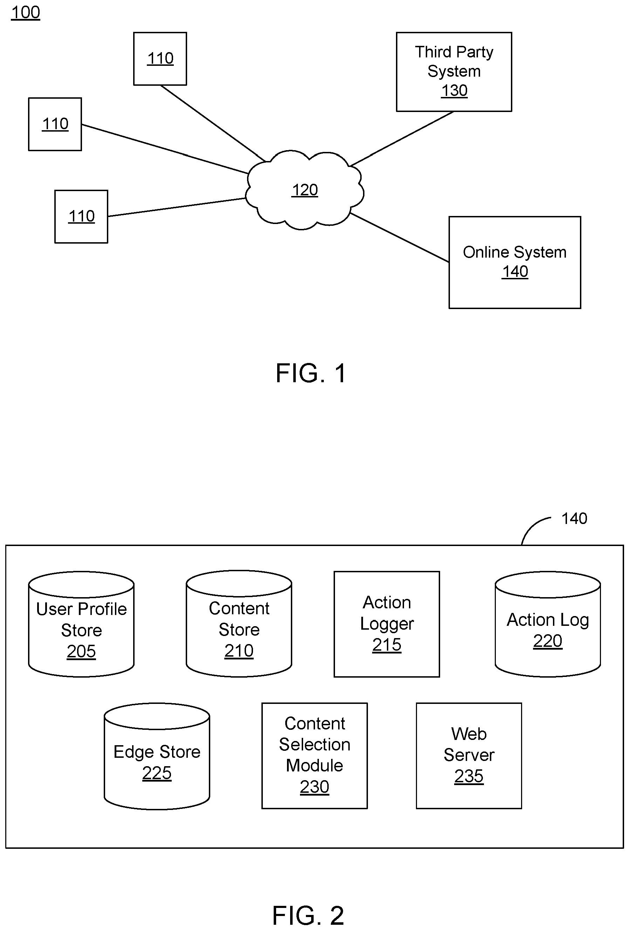

FIG. 1 is a block diagram of a system environment 100 for an online system 140. The system environment 100 shown by FIG. 1 comprises one or more client devices 110, a network 120, one or more third-party systems 130, and the online system 140. In alternative configurations, different and/or additional components may be included in the system environment 100. For example, the online system 140 is a social networking system, a content sharing network, or another system providing content to users.

The client devices 110 are one or more computing devices capable of receiving user input as well as transmitting and/or receiving data via the network 120. In one embodiment, a client device 110 is a conventional computer system, such as a desktop or a laptop computer. Alternatively, a client device 110 may be a device having computer functionality, such as a personal digital assistant (PDA), a mobile telephone, a smartphone, or another suitable device. A client device 110 is configured to communicate via the network 120. In one embodiment, a client device 110 executes an application allowing a user of the client device 110 to interact with the online system 140. For example, a client device 110 executes a browser application to enable interaction between the client device 110 and the online system 140 via the network 120. In another embodiment, a client device 110 interacts with the online system 140 through an application programming interface (API) running on a native operating system of the client device 110, such as IOS^{®} or ANDROID^{™}.

The client devices 110 are configured to communicate via the network 120, which may comprise any combination of local area and/or wide area networks, using both wired and/or wireless communication systems. In one embodiment, the network 120 uses standard communications technologies and/or protocols. For example, the network 120 includes communication links using technologies such as Ethernet, 802.11, worldwide interoperability for microwave access (WiMAX), 3G, 4G, code division multiple access (CDMA), digital subscriber line (DSL), etc. Examples of networking protocols used for communicating via the network 120 include multiprotocol label switching (MPLS), transmission control protocol/Internet protocol (TCP/IP), hypertext transport protocol (HTTP), simple mail transfer protocol (SMTP), and file transfer protocol (FTP). Data exchanged over the network 120 may be represented using any suitable format, such as hypertext markup language (HTML) or extensible markup language (XML). In some embodiments, all or some of the communication links of the network 120 may be encrypted using any suitable technique or techniques.

One or more third-party systems 130 may be coupled to the network 120 for communicating with the online system 140, which is further described below in conjunction with FIG. 2. In one embodiment, a third-party system 130 is an application provider communicating information describing applications for execution by a client device 110 or communicating data to client devices 110 for use by an application executing on the client device. In other embodiments, a third-party system 130 provides content or other information for presentation via a client device 110. A third-party system 130 may also communicate information to the online system 140, such as advertisements, content, or information about an application provided by the third-party system 130.

FIG. 2 is a block diagram of an architecture of the online system 140. The online system 140 shown in FIG. 2 includes a user profile store 205, a content store 210, an action logger 215, an action log 220, an edge store 225, a content selection module 230, and a web server 235. In other embodiments, the online system 140 may include additional, fewer, or different components for various applications. Conventional components such as network interfaces, security functions, load balancers, failover servers, management and network operations consoles, and the like are not shown so as to not obscure the details of the system architecture.

Each user of the online system 140 is associated with a user profile, which is stored in the user profile store 205. A user profile includes declarative information about the user that was explicitly shared by the user and may also include profile information inferred by the online system 140. In one embodiment, a user profile includes multiple data fields, each describing one or more attributes of the corresponding online system user. Examples of information stored in a user profile include biographic, demographic, and other types of descriptive information, such as work experience, educational history, gender, hobbies or preferences, location and the like. A user profile may also store other information provided by the user, for example, images or videos. In certain embodiments, images of users may be tagged with information identifying the online system users displayed in an image, with information identifying the images in which a user is tagged stored in the user profile of the user. A user profile in the user profile store 205 may also maintain references to actions by the corresponding user performed on content items in the content store 210 and stored in the action log 220.

In various embodiments, the online system 140 receives information from a user identifying various products that the user offers for purchase. The obtained information includes one or more pictures of each product associated with a product identifier and may also include additional information about each product. For example, the online system 140 obtains a product catalog from a user that includes entries for each product offered by the user. In some embodiments, an entry in the product catalog for a product includes a product identifier of the product, one or more pictures of the product, a name of the product, and a price at which the user offers the product for purchase. An entry in the product catalog for a product may also include a description of the product in some embodiments. Information identifying a product obtained from a user includes multiple pictures of the product in some embodiments, with different pictures corresponding to different positions of the product relative to an image capture device (e.g., a camera) that captured the pictures of the product. The online system 140 stores the information identifying the products offered by the user, which includes one or more pictures of each of the products in association with the user in a user profile for the user in the user profile store 205 in various embodiments. Alternatively, the online system 140 stores the obtained information describing products offered by the user in the content store 210 along with an association between the user profile of the user and the obtained information.

While user profiles in the user profile store 205 are frequently associated with individuals, allowing individuals to interact with each other via the online system 140, user profiles may also be stored for entities such as businesses or organizations. This allows an entity to establish a presence on the online system 140 for connecting and exchanging content with other online system users. The entity may post information about itself, about its products or provide other information to users of the online system 140 using a brand page associated with the entity's user profile. Other users of the online system 140 may connect to the brand page to receive information posted to the brand page or to receive information from the brand page. A user profile associated with the brand page may include information about the entity itself, providing users with background or informational data about the entity.

The content store 210 stores objects that each represent various types of content. Examples of content represented by an object include a page post, a status update, a photograph, a video, a link, a shared content item, a gaming application achievement, a check-in event at a local business, a brand page, or any other type of content. Online system users may create objects stored by the content store 210, such as status updates, photos tagged by users to be associated with other objects in the online system 140, events, groups or applications. In some embodiments, objects are received from third-party applications or third-party applications separate from the online system 140. In one embodiment, objects in the content store 210 represent single pieces of content, or content "items." Hence, online system users are encouraged to communicate with each other by posting text and content items of various types of media to the online system 140 through various communication channels. This increases the amount of interaction of users with each other and increases the frequency with which users interact within the online system 140.

One or more content items included in the content store 210 are "sponsored content items" that include content for presentation to a user and for which the online system 140 receives compensation from a user from whom the online system 140 obtained the sponsored content item in exchange for presenting the content item to another user, which may be contingent on whether the other user performs a specific action after the content from the sponsored content item is displayed to the other user. In various embodiments, the content also specifies a page of content. For example, a sponsored content item includes a landing page specifying a network address of a page of content to which a user is directed when the content item is accessed. In various embodiments, a bid amount of a sponsored content item specifies an amount of compensation the online system 140 receives in exchange for displaying the sponsored content item to users. The bid amount may be used to determine an expected value, such as monetary compensation, provided by the user to the online system 140 if content in the sponsored content item is presented to a viewing user, if the content in the sponsored content item receives an interaction from the viewing user when presented, or if any suitable condition is satisfied when content in the sponsored content item is presented to a user. For example, the bid amount of a sponsored content item specifies a monetary amount that the online system 140 receives from a user who provided the sponsored content item to the online system 140 if content in the sponsored content item is displayed. In some embodiments, the expected value to the online system 140 of presenting the content from the sponsored content item may be determined by multiplying the bid amount by a probability of the content of the content item being accessed by a user.

In various embodiments, a content item includes various components capable of being identified and retrieved by the online system 140. Example components of a content item include: a title, text data, image data, audio data, video data, a landing page, a user associated with the content item, or any other suitable information. The online system 140 may retrieve one or more specific components of a content item for presentation in some embodiments. For example, the online system 140 may identify a title and an image from a content item and provide the title and the image for presentation rather than the content item in its entirety.

Various content items, such as sponsored content items, may include an objective identifying an interaction that a user associated with a content item desires other users to perform when presented with content included in the content item. Example objectives include: installing an application associated with a content item, indicating a preference for a content item, sharing a content item with other users, interacting with an object associated with a content item, or performing any other suitable interaction. As content from a content item is presented to online system users, the online system 140 logs interactions between users presented with the content item or with objects associated with the content item. One or more objectives may identify a specific interaction with a landing page to which a content item, such as a sponsored content item, includes a link. Example specific interactions with the landing page include: establishing a connection to the landing page via the online system 140, transmitting a message to the publishing user through the online system via a link included on the landing page, indicating a preference for one or more content items included on the landing page, selecting a link to a website in a different domain than the online system 140 included on the landing page, selecting a link on the landing page to establish a telephone call to the publishing user, purchasing one or more products via the landing page, selecting a link on the landing page to obtain directions to a physical location associated with the publishing user, selecting a link on the landing page to transmit an electronic mail message to the publishing user, and any combination thereof. Additionally, the online system 140 receives compensation from a user associated with content item as online system users perform interactions with a content item that satisfy the objective included in the content item.

Additionally, a content item, such as a sponsored content item, may include one or more targeting criteria specified by the user who provided the content item to the online system 140. Targeting criteria included in a content item request specify one or more characteristics of users eligible to be presented with the content item. For example, targeting criteria are used to identify users having user profile information, edges, or actions satisfying at least one of the targeting criteria. Hence, targeting criteria allow a user to identify users having specific characteristics, simplifying subsequent distribution of content to different users.

In various embodiments, the content store 210 includes multiple campaigns, which each include one or more content items. In various embodiments, a campaign in associated with one or more characteristics that are attributed to each content item of the campaign. For example, a bid amount associated with a campaign is associated with each content item of the campaign. Similarly, an objective associated with a campaign is associated with each content item of the campaign. In various embodiments, a user providing content items to the online system 140 provides the online system 140 with various campaigns each including content items having different characteristics (e.g., associated with different content, including different types of content for presentation), and the campaigns are stored in the content store.

In one embodiment, targeting criteria may specify actions or types of connections between a user and another user or object of the online system 140. Targeting criteria may also specify interactions between a user and objects performed external to the online system 140, such as on a third-party system 130. For example, targeting criteria identifies users that have taken a particular action, such as sent a message to another user, used an application, joined a group, left a group, joined an event, generated an event description, purchased or reviewed a product or service using an online marketplace, requested information from a third-party system 130, installed an application, or performed any other suitable action. Including actions in targeting criteria allows users to further refine users eligible to be presented with content items. As another example, targeting criteria identifies users having a connection to another user or object or having a particular type of connection to another user or object.

Additionally, in various embodiments, the content store 210 includes one or more content reels, with each content reel including one or more content items. A content reel includes one or more content items and an order in which the content items are displayed when the content reel is displayed. A user selects content items for inclusion in a content reel, and the content store 210 stores an identifier of content reel in association with an identifier of the user and with identifiers of content items included in the content reel, and the order in which the content items are to be displayed. In various embodiments, content items are included in a content reel for a specific amount of time, and a content item is removed from the content reel after the specific amount of time from the inclusion of the content item in the content reel. For example, the online system 140 removes an association between an identifier of a content item and an identifier of a content reel 24 hours after a time when the content item was included in the content reel by a user associated with the content reel.

The action logger 215 receives communications about user actions (or "interactions") internal to and/or external to the online system 140, populating the action log 220 with information about user actions. Examples of actions include adding a connection to another user, sending a message to another user, uploading an image, reading a message from another user, viewing content associated with another user, and attending an event posted by another user. In addition, a number of actions may involve an object and one or more particular users, so these actions are associated with the particular users as well and stored in the action log 220.

The action log 220 may be used by the online system 140 to track user actions on the online system 140, as well as actions on third-party systems 130 that communicate information to the online system 140. Users may interact with various objects on the online system 140, and information describing these interactions is stored in the action log 220. Examples of interactions with objects include: commenting on posts, sharing links, checking-in to physical locations via a client device 110, accessing content items, and any other suitable interactions. Additional examples of interactions with objects on the online system 140 that are included in the action log 220 include: commenting on a photo album, communicating with a user, establishing a connection with an object, joining an event, joining a group, creating an event, authorizing an application, using an application, expressing a reaction to an object ("liking" the object), and engaging in a transaction. Additionally, the action log 220 may record a user's interactions with advertisements on the online system 140 as well as with other applications operating on the online system 140. In some embodiments, data from the action log 220 is used to infer interests or preferences of a user, augmenting the interests included in the user's user profile and allowing a more complete understanding of user preferences.

The action log 220 may also store user actions taken on a third-party system 130, such as an external website, and communicated to the online system 140. For example, an e-commerce website may recognize a user of an online system 140 through a social plug-in enabling the e-commerce website to identify the user of the online system 140. Because users of the online system 140 are uniquely identifiable, e-commerce websites, such as in the preceding example, may communicate information about a user's actions outside of the online system 140 to the online system 140 for association with the user. Hence, the action log 220 may record information about actions users perform on a third-party system 130, including webpage viewing histories, advertisements that were engaged, purchases made, and other patterns from shopping and buying. Additionally, actions a user performs via an application associated with a third-party system 130 and executing on a client device 110 may be communicated to the action logger 215 by the application for recordation and association with the user in the action log 220.

In one embodiment, the edge store 225 stores information describing connections between users and other objects on the online system 140 as edges. Some edges may be defined by users, allowing users to specify their relationships with other users. For example, users may generate edges with other users that parallel the users' real-life relationships, such as friends, coworkers, partners, and so forth. Other edges are generated when users interact with objects in the online system 140, such as expressing interest in a page on the online system 140, sharing a link with other users of the online system 140, and commenting on posts made by other users of the online system 140.

An edge may include various features each representing characteristics of interactions between users, interactions between users and objects, or interactions between objects. For example, features included in an edge describe a rate of interaction between two users, how recently two users have interacted with each other, a rate or an amount of information retrieved by one user about an object, or numbers and types of comments posted by a user about an object. The features may also represent information describing a particular object or user. For example, a feature may represent the level of interest that a user has in a particular topic, the rate at which the user logs into the online system 140, or information describing demographic information about the user. Each feature may be associated with a source object or user, a target object or user, and a feature value. A feature may be specified as an expression based on values describing the source object or user, the target object or user, or interactions between the source object or user and target object or user; hence, an edge may be represented as one or more feature expressions.

The edge store 225 also stores information about edges, such as affinity scores for objects, interests, and other users. Affinity scores, or "affinities," may be computed by the online system 140 over time to approximate a user's interest in an object or in another user in the online system 140 based on the actions performed by the user. A user's affinity may be computed by the online system 140 over time to approximate the user's interest in an object, in a topic, or in another user in the online system 140 based on actions performed by the user. Computation of affinity is further described in U.S. Patent Application No. 12/978,265, filed on December 23, 2010, U.S. Patent Application No. 13/690,254, filed on November 30, 2012, U.S. Patent Application No. 13/689,969, filed on November 30, 2012, and U.S. Patent Application No. 13/690,088, filed on November 30, 2012, each of which is hereby incorporated by reference in its entirety. Multiple interactions between a user and a specific object may be stored as a single edge in the edge store 225, in one embodiment. Alternatively, each interaction between a user and a specific object is stored as a separate edge. In some embodiments, connections between users may be stored in the user profile store 205, or the user profile store 205 may access the edge store 225 to determine connections between users.

The content selection module 230 selects one or more content items for communication to a client device 110 to be presented to a user. Content items eligible for presentation to the user are retrieved from the content store 210 or from another source by the content selection module 230, which selects one or more of the content items for presentation to the viewing user. A content item eligible for presentation to the user is a content item associated with at least a threshold number of targeting criteria satisfied by characteristics of the user or is a content item that is not associated with targeting criteria. In various embodiments, the content selection module 230 includes content items eligible for presentation to the user in one or more selection processes, which identify a set of content items for presentation to the user. For example, the content selection module 230 determines measures of relevance of various content items to the user based on characteristics associated with the user by the online system 140 and based on the user's affinity for different content items. In some embodiments, when determining a measure of relevance of a content item to a user, the content selection module 230 determines a likelihood of the user performing a specific interaction with a page of content to which the content item includes a link after being presented with the content item (e.g., within a threshold amount of time of the content item being presented to the user); in various embodiments, the specific interaction is associated with the content item by a publishing user from whom the online system 140 obtained the content item. Based on the measures of relevance, the content selection module 230 selects content items for presentation to the user. As an additional example, the content selection module 230 selects content items having the highest measures of relevance or having at least a threshold measure of relevance for presentation to the user. Alternatively, the content selection module 230 ranks content items based on their associated measures of relevance and selects content items having the highest positions in the ranking or having at least a threshold position in the ranking for presentation to the user.

Content items eligible for presentation to the user may include content items associated with bid amounts. The content selection module 230 uses the bid amounts associated with content items when selecting content for presentation to the user. In various embodiments, the content selection module 230 determines an expected value associated with various content items based on their bid amounts and selects content items associated with a maximum expected value or associated with at least a threshold expected value for presentation. An expected value associated with a content item represents an expected amount of compensation to the online system 140 for presenting the content item. For example, the expected value associated with a content item is a product of the content item's bid amount and a likelihood of the user interacting with the content item. In various embodiments, the expected value associated with a content item is a product of a bid amount included in the content item and a likelihood of the user performing a specific interaction with a landing page to which the content item includes a link after the content item is displayed to the user. The specific interaction with the landing page is specified by a publishing user from whom the online system 140 obtained the content item in various embodiments. The content selection module 230 may rank content items based on their associated bid amounts and select content items having at least a threshold position in the ranking for presentation to the user. In some embodiments, the content selection module 230 ranks both content items not associated with bid amounts and content items associated with bid amounts in a unified ranking based on bid amounts and measures of relevance associated with content items. Based on the unified ranking, the content selection module 230 selects content for presentation to the user. Selecting content items associated with bid amounts and content items not associated with bid amounts through a unified ranking is further described in U.S. Patent Application No. 13/545,266, filed on July 10, 2012, which is hereby incorporated by reference in its entirety.

For example, the content selection module 230 receives a request to present a feed of content to a user of the online system 140. The feed may include one or more content items associated with bid amounts and other content items, such as stories describing actions associated with other online system users connected to the user, which are not associated with bid amounts. The content selection module 230 accesses one or more of the user profile store 205, the content store 210, the action log 220, and the edge store 225 to retrieve information about the user. For example, information describing actions associated with other users connected to the user or other data associated with users connected to the user are retrieved. Content items from the content store 210 are retrieved and analyzed by the content selection module 230 to identify candidate content items eligible for presentation to the user. For example, content items associated with users who not connected to the user or stories associated with users for whom the user has less than a threshold affinity are discarded as candidate content items. Based on various criteria, the content selection module 230 selects one or more of the content items identified as candidate content items for presentation to the identified user. The selected content items are included in a feed of content that is presented to the user. For example, the feed of content includes at least a threshold number of content items describing actions associated with users connected to the user via the online system 140.

In various embodiments, the content selection module 230 presents content to a user through a newsfeed including a plurality of content items selected for presentation to the user. One or more content items may also be included in the feed. The content selection module 230 may also determine the order in which selected content items are presented via the feed. For example, the content selection module 230 orders content items in the feed based on likelihoods of the user interacting with various content items.

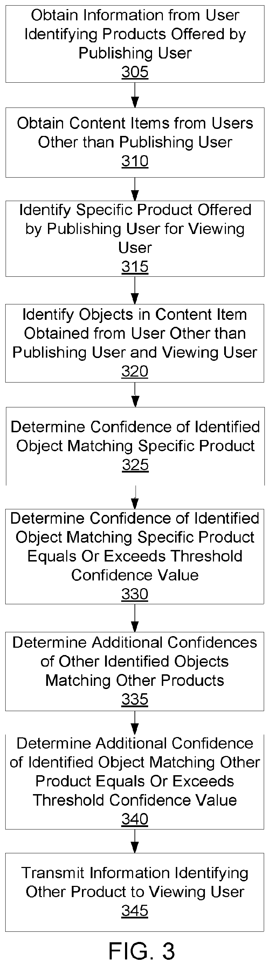

In various embodiments, the content selection module 230 trains and stores one or more machine learning models that identify objects within an image, or within video, included in a content item and that determine confidences of an identified object matching a product offered by a user from whom the content item was obtained. In various embodiments, the content selection model 230 maintains one or more machine learned models trained to identify objects within an image or video and maintains a separate machine learned identification model that compares an object identified within an image or within video to pictures of products offered bur purchase by a user from whom the image or the video was obtained. As further described below in conjunction with FIG. 3, the identification model determines confidences of an object identified within an image or within video matching different products offered by the user based on characteristics of the identified object and characteristics of pictures of different products offered by the user.

From pictures of products obtained from a publishing user offering the product and an identification of a specific product from a different viewing user, the content selection module 230 identifies content items obtained from other users different than the viewing user and different than the publishing user that include the specific product via the identification model. By applying the identification model to other objects in the identified content items and the information identifying products offered by the publishing user, the content selection module 230 identifies other products offered by the publishing user that are also included in content items from the other users that include the specific product. As further described below in conjunction with FIG. 3, the content selection module 230 transmits information identifying one or more of the other products appearing in content items from other users along with the specific product to the viewing user. This allows the content selection module 230 to identify additional products offered by the purchasing user likely to be of interest to the viewing user because the additional products are included in one or more content items from other users along with the specific product.

The web server 235 links the online system 140 via the network 120 to the one or more client devices 110, as well as to the one or more third-party systems 130. The web server 235 serves web pages, as well as other content, such as JAVA^{®}, FLASH^{®}, XML and so forth. The web server 235 may receive and route messages between the online system 140 and the client device 110, for example, instant messages, queued messages (e.g., email), text messages, short message service (SMS) messages, or messages sent using any other suitable messaging technique. A user may send a request to the web server 235 to upload information (e.g., images or videos) that are stored in the content store 210. Additionally, the web server 235 may provide application programming interface (API) functionality to send data directly to native client device operating systems, such as IOS^{®}, ANDROID^{™}, or BlackberryOS.

### Identify Cooccurring Products from a Publishing User in Content Items from Other Users

FIG. 3 is a flowchart of one embodiment of a method for an online system 140 to identify different products offered by a publishing user in a content item obtained from another user. For purposes of illustration, FIG. 3 describes the method in conjunction with identification of products offered by a user within an image obtained by the user, but the method described in conjunction with FIG. 3 may also be used to identify products offered by a user within a video obtained from the user (e.g., the method may be applied to frames of the video obtained from the user as described below in conjunction with FIG. 3 with regard to an image obtained from the user). In various embodiments, the method may include different or additional steps than those described in conjunction with FIG. 3. Additionally, in some embodiments, the method may perform the steps in different orders than the order described in conjunction with FIG. 3.

An online system 140, as further described above in conjunction with FIG. 2, obtains 305 information from a publishing user identifying products that the publishing user of the online system 140 offers for purchase by other users. The obtained information includes one or more images of each product associated with a product identifier and may also include additional information about each product. The obtained information may also include one or more videos of each product associated with a product identifier. For example, the online system 140 obtains 305 a product catalog from the publishing user that includes entries for each product offered by the user. In some embodiments, an entry in the product catalog for a product includes a product identifier of the product, one or more images of the product, a name of the product, a type of the product, and a price at which the user offers the product for purchase. An entry in the product catalog for a product may also include a description of the product in some embodiments. Information identifying a product obtained 305 from the publishing user includes multiple images of the product, with different images corresponding to different positions of the product relative to an image capture device (e.g., a camera) that captured the images of the product; hence, different images of the product correspond to different angle at which the product is viewed. The online system 140 stores the information identifying the products offered by the publishing user, which includes one or more images of each of the products corresponding to different angles at which the products are viewed in association with the publishing user. For example, the online system 140 stores information identifying the products offered by the publishing user in a user profile maintained by the online system 140 for the publishing user or stores the obtained information identifying products offered by the publishing user in association with a user profile identifying the publishing user.

Additionally, the online system 140 obtains 310 content items from various users other than the publishing user for presentation to other users. A content item obtained 310 from a user includes an image or a video and may also include text data or audio data. In various embodiments, a content item includes any combination of text data, audio data, image data, and video data for presentation to other users via the online system 140. One or more content items obtained 310 from users other than the viewing user include an image or a video including a product offered by the publishing user. The online system 140 leverages content items including the product offered by the publishing user to augment information stored by the online system 140 identifying the product offered by the publishing user.

Based on information from a viewing user other than the publishing user, the online system 140 identifies 315 a specific product offered by the publishing user. For example, the viewing user selects the specific product from information about products offered by the publishing user presented by the online system 140. As an example, the viewing user selects the specific product from a page presented by the online system 140 identifying various products offered by the publishing user, so the online system 140 identifies the specific product from the viewing user's selection via the page. In another example, the viewing user includes the specific product in an online shopping cart, and the online system 140 receives information identifying the viewing user and describing inclusion of the specific product in the online shopping cart to identify 315 the specific product. For another example, the online system 140 receives information from the publishing user identifying the viewing user, identifying the specific product, and describing an interaction by the viewing user requesting additional information about the specific product from the publishing user.

Other products offered by the publishing user may complement the specific product identified 315 by the viewing user or may be purchased by other users along with the specific product. To identify other products purchased or used in conjunction with the specific product, the online system 140 leverages content items obtained from users other than the publishing user and other than the viewing user. For a content item obtained 310 by the online system 140 from a user other than the publishing user and other than the viewing user, the online system 140 identifies 320 objects from the content item obtained 310 from a user other than the publishing user and other than the viewing user. In various embodiments, the online system 140 applies one or more object detection methods to an image or to a video included in the content item from the user other than the publishing user and other than the viewing user that identify objects in the image or in the video within the content item. In some embodiments, the online system 140 also identifies locations within the image of identified objects. For example, the online system 140 generates a bounding box surrounding each object identified the content item (e.g., within an image or a video included in the content item). In various embodiments, the online system 140 uses one or more object detection methods to identify 320 objects within the content item to generate bounding boxes corresponding to each of the identified objects. When identifying 320 objects from the content item, the online system 140 may also identify a category or a type for each identified object. For example, an object detection method applied by the online system 140 associates different types with objects based on characteristics of the objects, and the online system 140 associates a type from the object detection method with an identified object.

The online system 140 compares various objects identified 320 from the content item obtained 310 from the user other than the publishing user and other than the viewing user to pictures of the specific product identified 315 by the viewing user included in the information identifying products offered by the publishing user that the online system 140 obtained 305 from the publishing user. In some embodiments, the online system 140 compares each object identified 320 from the content item obtained 310 from the user other than the publishing user and other than the viewing user to pictures of the specific product obtained 305 from the publishing user. When comparing an object identified 320 from the content item obtained 310 from the user other than the publishing user and other than the viewing user to previously obtained 305 images of products offered by the publishing user, the online system 140 determines 325 a confidence of the identified object matching the specific product offered by the publishing user. To compare the object identified 320 in the content item obtained 310 from the user other than the publishing user and other than the viewing user to the specific product offered by the publishing user, the online system 140 applies an identification model to the identified object and to the pictures obtained 305 from the publishing user of the specific product offered by the publishing user. The online system 140 trains the machine learning identification model from comparisons of objects identified from images to products identified to the online system 140 by various users and may also account for comparisons of objects to publicly available information identifying different products when training the identification model. The online system 140 trains the identification model to determine a likelihood of an object identified from a content item (e.g., an image or a video included in the content item) matching a product based on prior matching of objects in content items to different products. For example, the online system 140 applies a label indicating a product matching an object identified from the content item to characteristics of the object identified from the content item. From the labeled characteristics of objects extracted from content items, the online system 140 trains the identification model using any suitable training method or combination of training methods (e.g., back propagation to train the identification model if it is a neural network, curve fitting techniques if the identification model is a linear regression). After training, the online system 140 applies the trained identification model to characteristics of objects identified within a content item, and the identification model outputs confidences of the object matching a product.

Responsive to online system 140 determining 330 the confidence of the object identified from the content item obtained 310 by the user other than the publishing user and other than the viewing user has at least a threshold confidence value of matching the specific product, the online system 140 determines the content item includes the specific product offered by the publishing user. In response to determining the content item includes the specific product offered by the publishing user that the viewing user identified 315, the online system 140 compares other objects identified 320 from the content item obtained 310 from the user other than the publishing user and other than the viewing user to pictures of other products identified 315 by the viewing user included in the information identifying products offered by the publishing user that the online system 140 obtained 305 from the publishing user. In some embodiments, the online system 140 compares each object identified 320 from the obtained content item other than the object having at least the threshold confidence value of matching the specific product to pictures of products other than the specified product obtained 305 from the publishing user. When comparing an object identified 320 from the content item obtained 310 from the user other than the publishing user and other than the viewing user to previously obtained 305 images of other products offered by the publishing user, the online system 140 determines 335 additional confidences of the other objects identified 320 in the obtained content item matching one or more other products offered by the publishing user. To compare an object identified 320 in the content item obtained 310 from the user other than the publishing user and other than the viewing user to one or more other products offered by the publishing user, the online system 140 applies the identification model to the identified object and to the pictures obtained 305 from the publishing user of various other products offered by the publishing user.

In response to determining 340 that an additional confidence of another object identified 315 in the content item has at least the threshold confidence value of matching another product offered by the publishing user, the online system 140 determines that the content item includes the other product offered by the publishing user. As multiple objects identified in the content item may have at least the threshold confidence value of matching various other products offered by the purchasing user, the online system 140 may determine that the content item includes multiple other products offered by the publishing user. Hence, application of the identification model allows the online system 140 to identify the specific product identified by the viewing user in a content item obtained 310 from another user as well as to identify other products offered by the purchasing user that are in the content item along with the specific product.

In some embodiments, the online system 140 transmits 345 information identifying one or more other products offered by the purchasing user the online system 140 determined 340 were included in the content item obtained 310 from the other user. For example, the online system 140 transmits 345 information identifying the specific product and identifying one or more of the other products included in the content item obtained 310 from the other user along with the specific product to the viewing user. The online system 140 may also include a prompt or an indication that the one or more other products were included in a content item along with the specific product. In some embodiment, the transmitted information also identifies the other user from whom the content item including the specific product and the one or more other products was obtained 310; for example, the transmitted information includes a username of the other user from whom the content item was obtained 310.

In some embodiments, the online system 140 may account for a frequency with which other objects are included in content items obtained 310 from other users along with the specific product when transmitting 345 information identifying one or more of the other products. For example, the online system 140 transmits 345 information identifying another product offered by the publishing user to the viewing user in response to the online system 140 determining that a number of content items obtained 310 from users includes the other product and the specific product equals or exceeds a threshold amount. In another example, the online system 140 determines a set of additional products for which at least one object identified in multiple content items has at least the threshold confidence value of matching. The online system 140 ranks the set of additional products based on a number of content items that include an object having the threshold confidence value of matching a corresponding additional product so additional products with the threshold confidence value of matching an object identified 315 in more content items obtained 310 from other users have higher positions in the ranking. The online system 140 transmits 345 information identifying an additional product having at least a threshold position in the ranking or transmits 345 information identifying an additional product having a highest position in the ranking, to the viewing user. Hence, the online system 140 may determine which additional products are identified to the viewing user based on a number of content items that include the additional products along with the specific product, allowing a frequency with which an additional product cooccurs with the specific product in content items to determine whether the online system 140 transmits information identifying the additional product to the viewing user. This allows the online system 140 to limit transmission of information identifying additional products to information identifying additional products offered by the publishing user that appear in content items including the specific product with at least a threshold frequency.

Additionally or alternatively, the online system 140 may account for an affinity between the viewing user and other users from whom the online system 140 obtained 310 content items including the specific product and including one or more other products offered by the publishing user. As further described above in conjunction with FIG. 2, the viewing user's affinity for another user approximates the viewing user's interest in the other user based on actions performed by the viewing user. A higher affinity by the viewing user for another user indicates that the viewing user has greater interest in the other user, indicating that the viewing user is more likely interested in content items the online system 140 obtained 310 from the other user. In some embodiments, the online system 140 transmits 345 information identifying one or more other products identified in a content item along with the specific product to the viewing user in response to the viewing user has at least a threshold affinity for the other user from whom the content item was obtained, and does not transmit the information identifying the one or more other products in response to the viewing user having less than the threshold affinity for the other user. Similarly, the online system 140 may account for affinities between the viewing user and other users from whom content items are obtained 310 when ranking additional products included along with the specific product in various obtained content items. For example, the online system 140 weights an occurrence of an additional product in a content item by a value based on an affinity of the viewing user for the other user from whom the content item was obtained 310. In various embodiments, the value by which the occurrence of an additional product in a content item is weighted is directly related (e.g., directly proportional) to the affinity of the viewing user for another user from whom the online system 140 obtained 310 the content item including the additional product and the specific product. The online system 140 ranks various additional products based on their weighted occurrences in content items (e.g., by summing the weighted occurrences of each additional product) and transmits 345 information identifying one or more additional products offered by the viewing user having at least a threshold position in the ranking or identifying an additional product having a maximum position in the ranking. Thus, the online system 140 may account for the viewing user's likely interest in content items obtained 310 from different other users to identify additional products offered by the purchasing user that users with whom the viewing user has greater affinities to the viewing user.

Additionally or alternatively, the online system 140 may account for differing types of the specific product and another product included with the specific product in a content item obtained 310 from another user. In various embodiments, the information identifying products offered by the publishing user associates a type with each product offered by the publishing user. For example, a type indicates whether a product is a hat, a shirt, pants, shoes, or another article of clothing. As another example, a type indicates whether a product is a table, a chair, a couch, an entertainment center, or another item of furniture. When the online system 140 determined a content item from another user included an object corresponding to the specific product and another object corresponding to another product, the online system 140 compares a type associated with the specific product and a type associated with the other product. If the type associated with the other product differs from the type associated with the specific product, the online system 140 transmits 345 information identifying the other product to the viewing user. However, the online system 140 does not transmit information identifying the other product to the viewing user if the specific product and the other product are associated with a common type. This allows the online system 140 to limit identification of other products to the viewing user to identifying different types of products, so the viewing user receives information about products in which the viewing user is likely to have an interest along with an interest in the specific product.

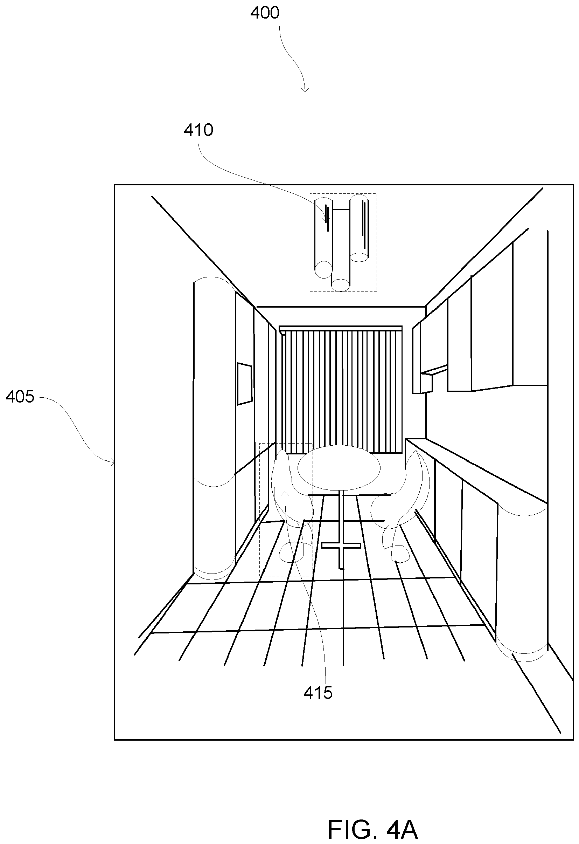

FIG. 4A is an example content item 405 obtained by an online system 140 from a user other than a viewing user that includes objects corresponding to multiple products offered by a purchasing user. In the example of FIG. 4A, the content item 405 includes an object corresponding to a specific product 410 offered by the publishing user that the viewing user has identified. The online system 140 applies an identification model to the content item 405 to determine that the object corresponds to the specific product 410, as further described above in conjunction with FIG. 3. Additionally, as further described above in conjunction with FIG. 3, the online system 140 applies the identification model to other objects identified in the content item 405 and to information identifying other products offered by the purchasing user. In the example of FIG. 4A, application of the identification model causes the online system 140 to determine that the content item 405 also includes an object corresponding to a different product 415 offered by the publishing user. Hence, the identification model allows the online system 140 to identify that the content item 405 includes both the specific product 410 identified by the viewing user and another product 415 offered by the publishing user.

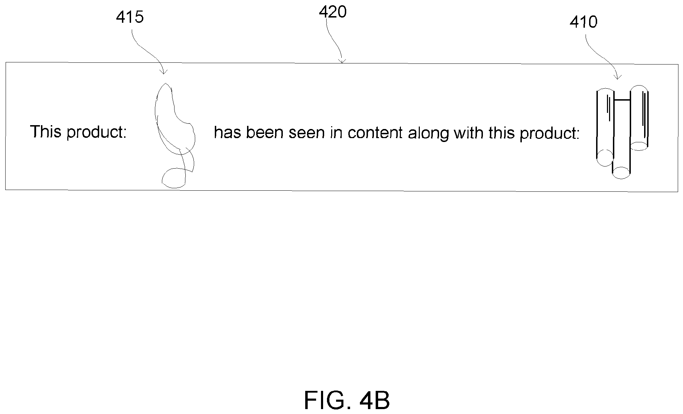

As further described above in conjunction with FIG. 3, the online system 140 transmits information identifying the other product 415 offered by the publishing user and identified in the content item 405 obtained from the other user to the viewing user. FIG. 4B is an example message 420 transmitted to the viewing user identifying the other product 415 offered by the publishing user that cooccurs with the specific product 410 in a content item from another user. In the example of FIG. 4B, the message includes an image of the other product 415, an image of the specific product 410, and a message indicating that the other product 415 has been seen in content along with the specific product 415. However, the message may include any suitable information identifying the specific product 410 and identifying the other product 415, such as textual descriptions, in other embodiments. Further, the message may include information about the content item including the specific product 410 and the other product 415 in various embodiments. For example, the message includes a username or other information identifying the user from whom the online system 140 obtained the content item including the specific product 410 and the other product 415. As further described above in conjunction with FIG. 3, the online system 140 may transmit the message shown in FIG. 4B when the other product 415 satisfies one or more criteria (e.g., appears in a threshold number of content items along with the specific product 410) or when a user from whom the content item including the specific product 410 and including the other product 415 was obtained satisfies one or more criteria (e.g., the viewing user has at least a threshold affinity for the user from whom the content item was obtained).

### Conclusion

The foregoing description of the embodiments has been presented for the purpose of illustration; it is not intended to be exhaustive or to limit the patent rights to the precise forms disclosed. Persons skilled in the relevant art can appreciate that many modifications and variations are possible in light of the above disclosure.

Some portions of this description describe the embodiments in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as modules, without loss of generality. The described operations and their associated modules may be embodied in software, firmware, hardware, or any combinations thereof

Any of the steps, operations, or processes described herein may be performed or implemented with one or more hardware or software modules, alone or in combination with other devices. In one embodiment, a software module is implemented with a computer program product comprising a computer-readable medium containing computer program code, which can be executed by a computer processor for performing any or all of the steps, operations, or processes described.

Embodiments may also relate to an apparatus for performing the operations herein. This apparatus may be specially constructed for the required purposes, and/or it may comprise a general-purpose computing device selectively activated or reconfigured by a computer program stored in the computer. Such a computer program may be stored in a non-transitory, tangible computer readable storage medium, or any type of media suitable for storing electronic instructions, which may be coupled to a computer system bus. Furthermore, any computing systems referred to in the specification may include a single processor or may be architectures employing multiple processor designs for increased computing capability.

Embodiments may also relate to a product that is produced by a computing process described herein. Such a product may comprise information resulting from a computing process, where the information is stored on a non-transitory, tangible computer readable storage medium and may include any embodiment of a computer program product or other data combination described herein.

Finally, the language used in the specification has been principally selected for readability and instructional purposes, and it may not have been selected to delineate or circumscribe the patent rights. It is therefore intended that the scope of the patent rights be limited not by this detailed description, but rather by any claims that issue on an application based hereon. Accordingly, the disclosure of the embodiments is intended to be illustrative, but not limiting, of the scope of the patent rights, which is set forth in the following claims.

## Claims

1. A method comprising:
obtaining information identifying products offered by a publishing user of an online system, the obtained information including pictures of a product corresponding to different angles of the product;
obtaining, at the online system, content items from one or more other users of the online system different from the publishing user;
identifying, by the online system, a specific product offered by the publishing user of interest to a viewing user, the viewing user other than the publishing user;
identifying a content item obtained from one or more users other than the publishing user and other than the viewing user;
determining, by the online system, a confidence of an object identified in the content item matching the specific product by applying an identification model to the object identified the content item and to the pictures of the specific product obtained from the publishing user;
determining that the confidence matches the specific product equals or exceeds a threshold confidence value;
determining, by the online system, an additional confidence of another object identified in the content item matching another product by applying the identification model to the other object identified in the content item and to pictures of the other product obtained from the publishing user;
determining that the additional confidence equals or exceeds the threshold confidence value; and
transmitting, by the online system, information identifying the other product offered by the publishing user to the viewing user.

2. The method of claim 1, wherein transmitting, by the online system, information identifying the other product offered by the publishing user to the viewing user comprises:
determining a number of content items obtained from other users including an object having at least the threshold confidence value of matching the specific product and including another object having at least the threshold confidence value of matching the other product offered by the publishing user; and
identifying information identifying the other product offered by the publishing user in response to the determined number of content items equaling or exceeding a threshold amount.

3. The method of claim 1, wherein transmitting, by the online system, information identifying the other product offered by the publishing user to the viewing user comprises:
determining a set of additional products offered by the publishing user for which objects identified in content items obtained from other users have at least the threshold confidence value of matching at least one additional object offered by the publishing user;
ranking the set of additional products offered by the publishing user based on a number of content items obtained from other users including at least one object having at least the threshold confidence value matching a corresponding additional product; and
identifying one or more additional products of the set having at least a threshold position in the ranking to the viewing user.

4. The method of claim 3, wherein ranking the set of additional products offered by the publishing user based on the number of content items obtained from other users including at least one object having at least the threshold confidence value matching the corresponding additional project comprises:
identifying other users from whom the online system obtained content items including at least one object having at least the threshold confidence value of matching the corresponding additional product;
determining affinities of the viewing user for each of the identified other users; and
ranking the set of additional products offered by the publishing user based on the number of content items obtained from other users including at least one object having at least the threshold confidence value matching the corresponding additional product and affinities of the viewing user for identified other users from which content items including at least one object having at least the threshold confidence value of matching the corresponding additional product.

5. The method of claim 1, wherein transmitting, by the online system, information identifying the other product offered by the publishing user to the viewing user comprises:
determining an affinity of the viewing user for the other user from whom the content item was obtained; and
transmitting the information identifying the other product offered by the publishing user to the viewing user in response to the determined affinity equaling or exceeding a threshold affinity.

6. The method of claim 1, wherein the specific product has a type.

7. The method of claim 6, wherein the other product has a different type than the type of the specific product.

8. The method of claim 1, wherein transmitting, by the online system, information identifying the other product offered by the publishing user to the viewing user comprises:
transmitting information identifying the specific product and identifying the other product offered by the publishing user to the viewing user.

9. The method of claim 8, wherein the information identifying the specific product and identifying the other product offered by the publishing user also includes information identifying the user other than the publishing user and other than the viewing user.

10. The method of claim 1, wherein identifying, by the online system, the specific product offered by the publishing user of interest to the viewing user, the viewing user other than the publishing user comprises:
receiving, at the online system, information identifying the viewing user, identifying the specific product, and describing inclusion of the specific product in an online shopping cart by the viewing user.

11. A computer program product comprising a non-transitory computer readable storage medium having instructions encoded thereon that, when executed by a processor cause the processor to the method of any of claims 1-10.
